# EUROPEAN PATENT APPLICATION

(11) **EP 4 455 731 A1**
(43) Date of publication of application: **30.10.2024**
(21) Application number: 22910730.5
(22) Date of filing: 24.11.2022
(51) Int. Cl.: G01S 17/894

(54) **MEASUREMENT DEVICE**

(30) Priority: 24.12.2021 JP 2021211069
(71) Applicant: KOITO MANUFACTURING CO., LTD., Minato-ku, Tokyo, 108-8711 (JP)
(72) Inventor: TAKAHASHI Masayuki, Shizuoka-shi, Shizuoka 424-8764 (JP); NAKAMURA Yasuo, Shizuoka-shi, Shizuoka 424-8764 (JP); HOSHI Kenichi, Shizuoka-shi, Shizuoka 424-8764 (JP); KATO Daiki, Shizuoka-shi, Shizuoka 424-8764 (JP)
(74) Representative: Grünecker Patent- und Rechtsanwälte PartG mbB
(86) International application number: PCT/JP2022/043362
(87) International publication number: WO 2023/120012

(57) **Abstract**

This measurement device (1) comprises: a light emitting unit (10) that emits pulsed light; an imaging sensor (22) that outputs a signal value corresponding to an amount of exposure for each pixel (221); a timing control unit (32) that exposes reflected light to the pixel (221) of the imaging sensor (22) during an exposure period of an exposure width (Gw) which is set in accordance with an area to be measured and is shorter than a pulse width (Lw) of the pulsed light; and a calculation unit (36) that calculates an arrival time (Tx) of the reflected light, on the basis of the signal values (Sa to Sd) corresponding to the three or more consecutive exposure periods (A to D) that can include the pulse width (Lw).

## Description

### TECHNICAL FIELD

The present disclosure relates to a measurement device.

### BACKGROUND ART

Patent Literature 1 discloses an indirect time-of-flight (ToF) measurement device that measures a distance to a target based on emission of laser light (pulsed light) and exposure to the reflected and returned light.

### CITATION LIST

### PATENT LITERATURE

Patent Literature 1: JP2021-25833A

### SUMMARY OF INVENTION

### TECHNICAL PROBLEM

In the measurement device disclosed in Patent Literature 1, exposure is performed with the same width as a pulse width of the emitted light. Although it is effective to narrow the pulse width to increase a distance resolution, there is a limit to narrowing the pulse width of the emitted light due to structural and cost restrictions of a light source. Therefore, if there is a restriction that the width of exposure is the same as the pulse width of the emitted light, it is difficult to increase the distance resolution. Accordingly, measurement accuracy may be deteriorate.

An object of the present disclosure is to provide a measurement device capable of improving measurement accuracy.

### SOLUTION TO PROBLEM

In order to achieve the above object, the present disclosure mainly provides a measurement device including: a light emitting unit configured to emit pulsed light; an imaging sensor configured to output a signal value corresponding to an exposure amount for each pixel; a timing control unit configured to expose the pixel of the imaging sensor to reflected light in an exposure period that is set according to a measurement target region and has an exposure width shorter than a pulse width of the pulsed light; and a calculation unit configured to calculate an arrival time of the reflected light based on signal values corresponding to three or more consecutive exposure periods that include the pulse width.

### ADVANTAGEOUS EFFECTS OF INVENTION

According to the present disclosure, it is possible to provide a measurement device capable of improving measurement accuracy.

### BRIEF DESCRIPTION OF DRAWINGS

[FIG. 1A] FIG. 1A is a diagram showing a configuration of a measurement device 1.
[FIG. 1B] FIG. 1B is a diagram showing light emission timings and exposure timings.
[FIG. 2] FIG. 2 is a diagram showing image creation using an indirect ToF.
[FIG. 3] FIG. 3 is a diagram showing a configuration example of an imaging sensor 22.
[FIG. 4] FIG. 4 is a diagram showing a relationship between light emission and exposure in the measurement device 1 according to the present embodiment.
[FIG. 5] FIG. 5 is an overall flowchart showing an operation of the measurement device 1 according to the present embodiment.
[FIG. 6] FIG. 6 is a diagram showing image acquisition.
[FIG. 7] FIG. 7 is a flowchart showing distance calculation processing.
[FIG. 8] FIG. 8 is a conceptual diagram showing the distance calculation processing.
[FIG. 9] FIG. 9 is a conceptual diagram showing the distance calculation processing.
[FIG. 10] FIG. 10 is a diagram showing a relationship between light emission and exposure according to a comparative example.

### DESCRIPTION OF EMBODIMENTS

Hereinafter, an embodiment of the present disclosure will be described with reference to the drawings.

### = = = = = Embodiment = = = = =

### <<Overview of Measurement Device>>

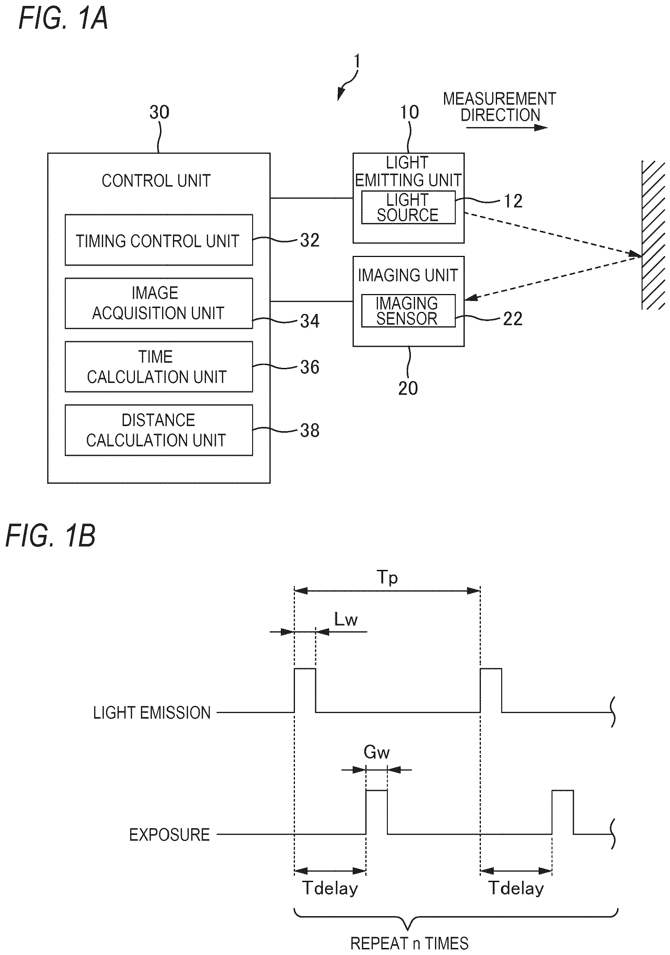

FIG. 1A is a diagram showing a configuration of a measurement device 1.

The measurement device 1 shown in FIG. 1A is a time-of-flight (ToF) device that measures a distance to an object in front. In the present embodiment, an indirect ToF camera is used. Such a measurement device 1 can remove influence of fog or rain, and perform imaging and measurement even in bad weather. The measurement device 1 is provided, for example, in a vehicle.

As shown in FIG. 1A, the measurement device 1 includes a light emitting unit 10, an imaging unit 20, and a control unit 30.

The light emitting unit 10 emits (projects) light to a space to be imaged. The light emitting unit 10 controls light emission according to an instruction from the control unit 30. The light emitting unit 10 includes a light source 12 and a projecting optical system (not shown) that emits light generated by the light source 12.

The light source 12 includes a light emitting element. The light source 12 emits pulsed laser light under the control of the control unit 30. Hereinafter, this pulsed light is also referred to as a light emission pulse.

The imaging unit 20 (indirect ToF camera) performs imaging based on exposure to light reflected by a target of distance measurement. The imaging unit 20 includes an imaging sensor 22 and an exposure optical system (not shown) that guides incident (exposed) light to the imaging sensor 22.

The imaging sensor 22 images an object to be imaged according to an instruction from the control unit 30 and outputs image data obtained by imaging to an image acquisition unit 34 of the control unit 30. A value (pixel data) of each pixel constituting the image data indicates a signal value corresponding to an exposure amount. The imaging sensor 22 will be described in detail later.

The control unit 30 controls the measurement device 1. The control unit 30 is implemented by a hardware configuration such as an element or a circuit, such as a memory or a CPU. The control unit 30 implements a predetermined function by the CPU executing a program stored in the memory. FIG. 1A shows various functions implemented by the control unit 30. The control unit 30 includes a timing control unit 32, the image acquisition unit 34, a time calculation unit 36, and a distance calculation unit 38.

The timing control unit 32 controls a light emission timing of the light emitting unit 10 and an exposure timing of the imaging unit 20. The light emission timing and the exposure timing will be described later.

The image acquisition unit 34 acquires image data from the imaging sensor 22 of the imaging unit 20. The image acquisition unit 34 includes a memory (not shown) that stores the acquired image data.

The time calculation unit 36 calculates an arrival time (time of flight of light: ToF) from when the light emitting unit 10 emits light until the reflected light reaches the imaging unit 20. In the present embodiment, the time calculation unit 36 corresponds to a "calculation unit".

The distance calculation unit 38 calculates a distance based on the arrival time of the light. As will be described later, a distance image can be acquired by calculating a distance for each pixel.

### <<Indirect ToF>>

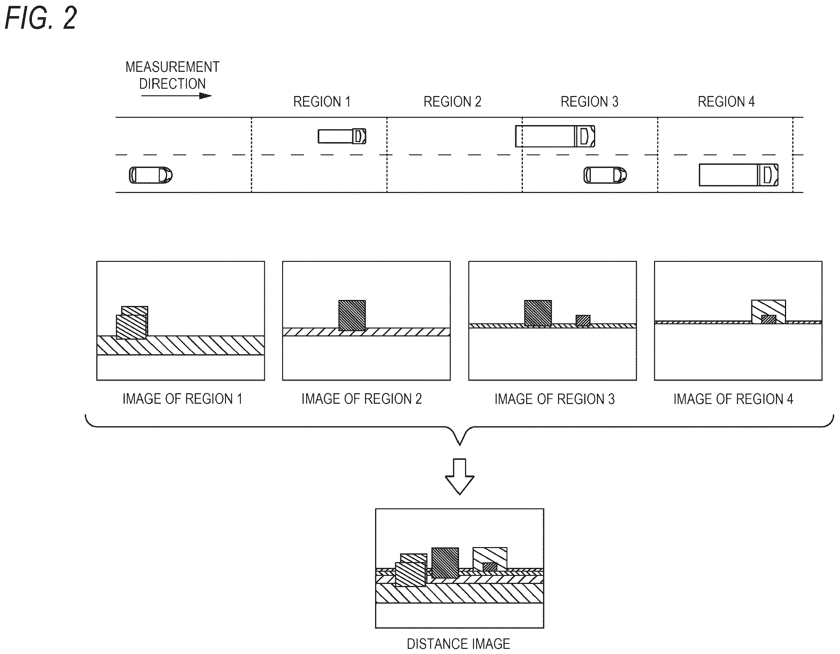

FIG. 1B is a diagram showing light emission timings and exposure timings. FIG. 2 is a diagram showing distance image creation using the indirect ToF.

First, as shown in FIG. 1B, the control unit 30 (timing control unit 32) causes the light emitting unit 10 to emit a light emission pulse. A width of the light emission pulse (hereinafter, pulse width) is Lw.

The control unit 30 (timing control unit 32) causes the imaging sensor 22 of the imaging unit 20 to be exposed to the reflected light after a time Tdelay from emission of the light emission pulse. An exposure period is set based on the delay time Tdelay and an exposure width Gw.

The time Tdelay is a time (delay time) from the emission of the light emission pulse to a start of the exposure period. The delay time Tdelay is set according to a distance to a measurement target region. That is, by setting a short time from when the light emitting unit 10 emits the light emission pulse until the imaging sensor 22 starts exposure, an image of a target (object that reflects light) in a short distance region can be acquired. Conversely, by setting a long time from when the light emitting unit 10 emits the light emission pulse until the imaging sensor 22 starts exposure, an image of a target in a long distance region can be acquired.

The exposure width Gw is a width of the exposure period (that is, a period from a start of the exposure to an end of the exposure). The width of the exposure period defines a length of the measurement target region in a measurement direction. Accordingly, the smaller the exposure width Gw is, the higher a distance resolution becomes.

In the present embodiment, as shown in FIG. 2, different exposure periods are set according to the distance to the measurement target region. Four regions are shown in FIG. 2 for simplicity, but the number N of regions is actually greater than four.

The light emission and the exposure are repeated a plurality of times at a cycle Tp shown in FIG. 1B. This is for storing charges in the imaging sensor 22 to be described later. The farther a region i is, the greater the number nᵢ of times of repetition is set. This is because the farther the region i is, the weaker the reflected light becomes.

In an image obtained for each region, a target (object that reflects light) present in the region is imaged. The image for each region may be referred to as a "range image". A value (image data) of each pixel constituting the image indicates a signal value corresponding to an exposure amount.

As shown in FIG. 2, the measurement device 1 according to the present embodiment acquires image data on a plurality of regions of different distances, and can acquire a distance image indicating a distance to a target based on a plurality of pieces of acquired image data. This distance image may be referred to as a "frame".

When there is one measurable region for once light emission, it takes time to acquire image data on a large number of regions, so that a measurement time becomes long (it is difficult to increase a speed of a flame per seconds (FPS)). Therefore, in the present embodiment, a plurality of exposure periods are set for once light emission, and a plurality of regions are measured for once light emission. Therefore, in the present embodiment, a multi-tap CMOS image sensor is used as the imaging sensor 22. However, the imaging sensor 22 is not limited to the multi-tap CMOS image sensor. The number of measurable regions for once light emission may be one.

### <<Imaging Sensor 22>>

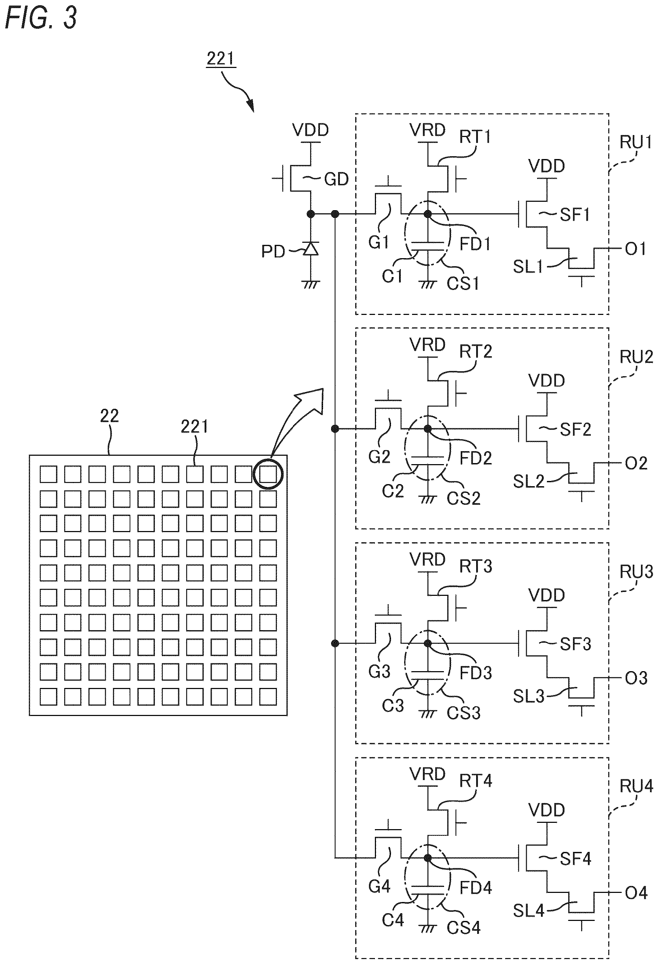

FIG. 3 is a diagram showing a configuration example of the imaging sensor 22.

As shown in FIG. 3, a plurality of pixels 221 are two-dimensionally arranged (for example, 640 × 480) in the imaging sensor 22. One light receiving element PD and a plurality of (here, four) signal reading units RU1 to RU4 corresponding to the one light receiving element PD are provided in each pixel 221. The signal reading units RU1 to RU4 have the same configuration (only numerals of constituent elements are different). In the following description, the signal reading unit is mainly described using the signal reading unit RU1.

The light receiving element PD is an element (for example, a photodiode) that generates charges corresponding to an exposure amount.

The signal reading unit RU1 includes an storage unit CS1, a transistor G1, a reset transistor RT1, a source follower transistor SF1, and a selection transistor SL1.

The storage unit CS1 stores the charges generated by the light receiving element PD, and includes a storage capacitor C 1 and a floating diffusion FD1.

The transistor G1 is provided between the light receiving element PD and the storage unit CS1. The transistor G1 is turned on in a predetermined exposure period (for example, an exposure period A to be described later) and supplies the charges generated by the light receiving element PD to the storage unit CS1 based on an instruction from the timing control unit 32 of the control unit 30. Similarly, transistors G2 to G4 supply the charges generated by the light receiving element PD to the storage units CS2 to CS4, respectively, based on instructions from the timing control unit 32. That is, transistors G1 to G4 correspond to a "drive circuit" that distributes the charges generated by the light receiving element PD to storage units CS1 to CS4 according to the exposure period.

In this way, the imaging sensor 22 according to the present embodiment can divide and store the charges generated in four exposure periods in the storage units (CS1 to CS4) corresponding to each exposure period. The charges are repeatedly stored in each storage unit according to the number n of times of repetition. The charges stored in each storage unit correspond to an amount of light to which the light receiving element PD is exposed in each exposure period. A signal value is output based on the charges stored in the storage unit. The signal value based on the charges stored in the storage unit is a signal value corresponding to the exposure amount in each exposure period.

With such an imaging sensor 22, four regions can be measured by imaging once. That is, four range images are obtained by imaging once. The number of (here, four) range images obtained by imaging once may be referred to as a "subframe". A plurality of regions (here, four regions) measured by imaging once may be referred to as a "zone".

### <<Distance Calculation>>

Before describing distance calculation according to the present embodiment, first, a comparative example will be described.

### <Comparative Example>

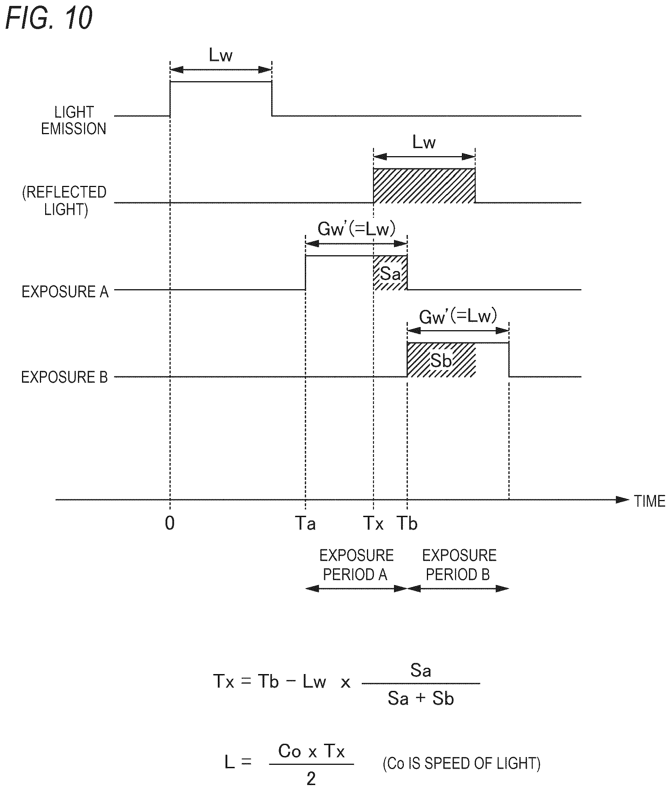

FIG. 10 is a diagram showing a relationship between light emission and exposure according to a comparative example.

In FIG. 10, a pulse width of a light emission pulse is Lw. Apulse width of the reflected light is also denoted by Lw. In the comparative example, exposure A and exposure B are set.

An exposure period (exposure period A) corresponding to a predetermined region A is set for the exposure A. A delay time of the exposure A with respect to a start (time 0) of light emission of the light emission pulse is a delay time Ta (corresponding to Tdelay in FIG. 1B). An exposure width of the exposure A is Gw' (= Lw). The pixel 221 of the imaging sensor 22 acquires a signal value Sa corresponding to an exposure amount of the reflected light in the exposure period A having the exposure width Gw'.

An exposure period (exposure period B) corresponding to a region B is set for the exposure B. The region B is a region adjacent to the region A in a measurement direction. A delay time of the exposure B with respect to a start (time 0) of light emission of the light emission pulse is a delay time Tb (corresponding to Tdelay in FIG. 1B: Tb = Ta + Lw). An exposure width of the exposure B is also Gw' (= Lw). The pixel 221 of the imaging sensor 22 acquires a signal value Sb corresponding to an exposure amount of the reflected light in the exposure period B.

Tx is an arrival time (time of flight of light: ToF) from emission of light (light emission pulse) to arrival of the reflected light. In the comparative example, the arrival time Tx is calculated by Tx = Tb - Lw × Sa/(Sa + Sb) ... (1).

When a distance to a target is L, the distance L to the target is calculated based on the arrival time Tx. That is, since the light travels twice the distance L during the arrival time Tx, when a speed of the light is Co, L = (Co × Tx)/2...(2).

In the comparative example, the exposure width Gw' is set to the same value as the pulse width Lw of the light emission pulse. As described above, reducing a pulse width is effective in increasing a distance resolution. However, the pulse width Lw may not be reduced due to structural and cost restrictions of the light source. Therefore, if there is a restriction that the exposure width Gw' is equal to the pulse width Lw, it is difficult to increase the distance resolution.

### <Present Embodiment>

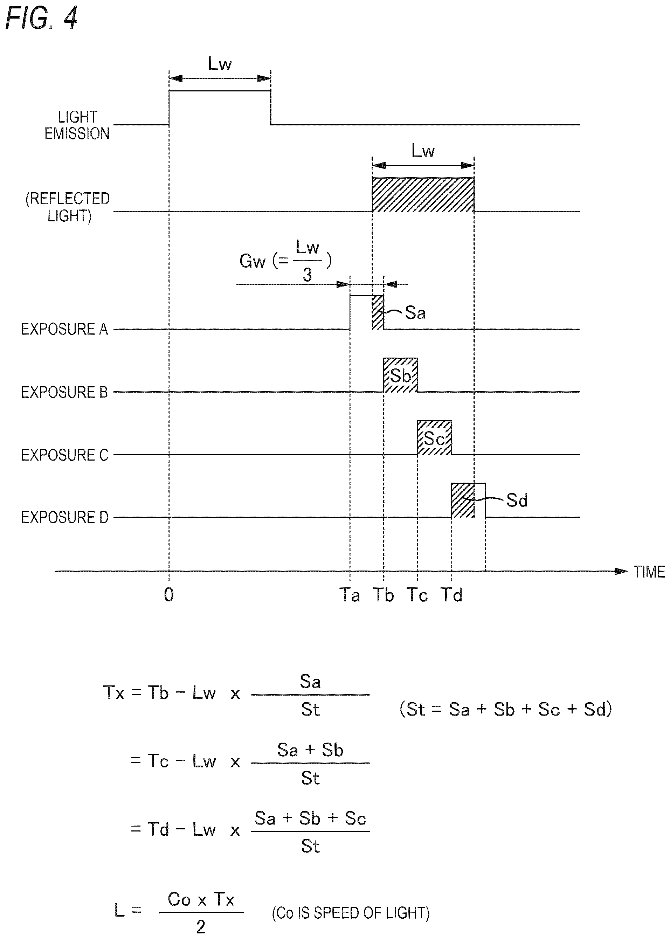

FIG. 4 is a diagram showing a relationship between light emission and exposure in the measurement device 1 according to the present embodiment.

In FIG. 4, a pulse width of the light emission pulse (and a pulse width of the reflected light) is Lw equal to that in the comparative example. However, in the present embodiment, exposure A, exposure B, exposure C, and exposure D are set. Each of widths of exposure periods (exposure widths) of exposure A to D is Gw. H/L levels of the exposure A to D indicate whether the transistors G1 to G4 in FIG. 3 are turned on or off. For example, the transistor G1 is turned on in the exposure period A (exposure width Gw) of the exposure A, and charges generated by the light receiving element PD are stored in the storage capacitor C1 of the storage unit CS1.

An exposure period (exposure period A) corresponding to a region A is set for the exposure A. A delay time of the exposure A with respect to a start (time 0) of light emission of the light emission pulse is a delay time Ta (corresponding to Tdelay in FIG. 1B).

The exposure width Gw is smaller than the exposure width Gw' in the comparative example. That is, an exposure period of the exposure A is set to be shorter than the pulse width Lw of the light emission pulse. By shortening the exposure period in this way, measurement accuracy can be improved as compared with the comparative example. The exposure width Gw of the exposure period A is set to an integer fraction of the pulse width Lw of the light emission pulse. Here, the exposure width Gw is set to one third of the pulse width Lw of the light emission pulse. However, the exposure width Gw is not limited to one third of the pulse width Lw of the light emission pulse.

The pixel 221 of the imaging sensor 22 acquires a signal value Sa corresponding to an exposure amount of the reflected light in the exposure period A having the exposure width Gw. The signal value Sa corresponds to a value (pixel data) of a pixel constituting image data of an image (range image) of the region A. FIG. 4 is shown based on charges in once exposure for description, but actually a signal value S (here, the signal value Sa) is a signal value corresponding to charges (corresponding to an exposure amount) stored by repeating the exposure for the number n of times of repetition.

Exposure periods (exposure periods B to D) corresponding to regions B to D are respectively set for exposure B to D. The region B is a region adjacent to the region A in a measurement direction, the region C is a region adjacent to the region B in the measurement direction, and the region D is a region adjacent to the region C in the measurement direction.

A delay time of the exposure B with respect to a start (time 0) of light emission of the light emission pulse is a delay time Tb (corresponding to Tdelay in FIG. 1B: corresponding to Tb = Ta + Lw).

Each of exposure widths of the exposure B to D is Gw (= Lw) similarly to the exposure width in the exposure A. The pixel 221 of the imaging sensor 22 acquires signal values Sb to Sd corresponding to exposure amounts of the reflected light in the exposure periods B to D of the exposure B to D. The signal values Sb to Sd correspond to values (pixel data) of pixels constituting image data of images (range images) of the regions B to D.

Regions A to D correspond to "three or more consecutive exposure periods that can include the pulse width", and here correspond to four exposure periods. "The number of consecutive exposure periods that can include the pulse width" is "a number larger by one than an integer part of Lw/Gw". In the present embodiment, Lw/Gw = 3, and the number of exposure periods is set to four (exposure A to D). Accordingly, the minimum number of exposure periods can be set.

Next, a method for calculating the arrival time Tx will be described.

In the present embodiment, the control unit 30 (specifically, the time calculation unit 36) calculates the arrival time Tx of the reflected light based on signal values corresponding to three or more consecutive exposure periods that can include the pulse width Lw. Specifically, the control unit 30 calculates the arrival time Tx of the reflected light based on a ratio (Sx/St) of a signal value Sx corresponding to an exposure amount before a boundary timing of any two exposure periods among the three or more consecutive exposure periods that can include the pulse width Lw to a sum St of the signal values corresponding to the three or more exposure periods.

The three or more consecutive exposure periods that can include the pulse width Lw are periods (exposure periods A to D) of the exposure A to D here. Here, a reason why it is set to three or more is to ensure a period in which exposure to the reflected light having the pulse width Lw can be performed in a situation where the width (exposure width) Gw of the exposure period is set smaller than the pulse width Lw. Here, the signal values corresponding to three or more consecutive exposure periods that can include the pulse width Lw are signal values Sa, Sb, Sc, and Sd.

Here, the sum St of the signal values is a sum of the signal values Sa, Sb, Sc, and Sd (St = Sa + Sb + Sc + Sd). Here, the boundary timing is Tb, Tc, or Td in FIG. 4.

Assuming that the signal value corresponding to the exposure amount before the boundary timing is Sx, Sx = Sa when the boundary timing is Tb, Sx = Sa + Sb when the boundary timing is Tc, and Sx = Sa + Sb + Sc when the boundary timing is Td.

Here, for example, when focusing on the boundary timing Tb, the arrival time Tx is expressed as Tx = Tb - Lw × Sa/St...(3) using the sum St of the signal values.

Similarly, when focusing on the boundary timing Tc and focusing on the boundary timing Td, respectively, Tx = Tc - Lw × (Sa + Sb)/St...(4) and
Tx = Td - Lw × (Sa + Sb + Sc)/St...(5). That is, the arrival time Tx corresponds to a time (Tx = Ts - Lw × Sx/St) obtained by subtracting a value of a product of the ratio (= Sx/St) of the calculated signal value and the pulse width Lw from a boundary timing Ts.

The light travels twice the distance L during the arrival time Tx. Therefore, the control unit 30 (specifically, the distance calculation unit 38) can calculate the distance L according to L = (Co × Tx)/2 in Equation (2) similarly to the comparative example.

By the way, the signal value Sa in the exposure period A may be small. In this case, an error in the signal value Sa becomes large (an S/N ratio of the signal value Sa may be large). That is, when the arrival time Tx or the distance L is calculated based on Equation (3) among the above calculation equations, the error may become large. Therefore, the boundary timing Ts is preferably a boundary between two exposure periods that are the second and subsequent periods among the three or more exposure periods that can include the pulse width Lw. Here, the boundary timing Ts is preferably Tc or Td. That is, in the present embodiment, the control unit 30 (specifically, the time calculation unit 36) calculates the arrival time Tx according to the second equation (Equation (4)) or the third equation (Equation (5)) among the above three calculation equations. Accordingly, influence of the error in the signal value Sa can be reduced.

### <Operation of Measurement Device 1>

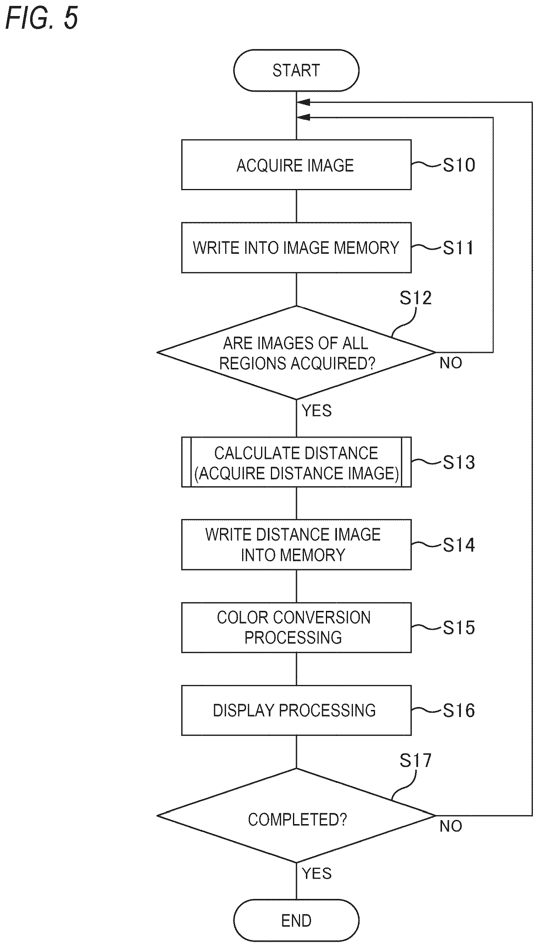

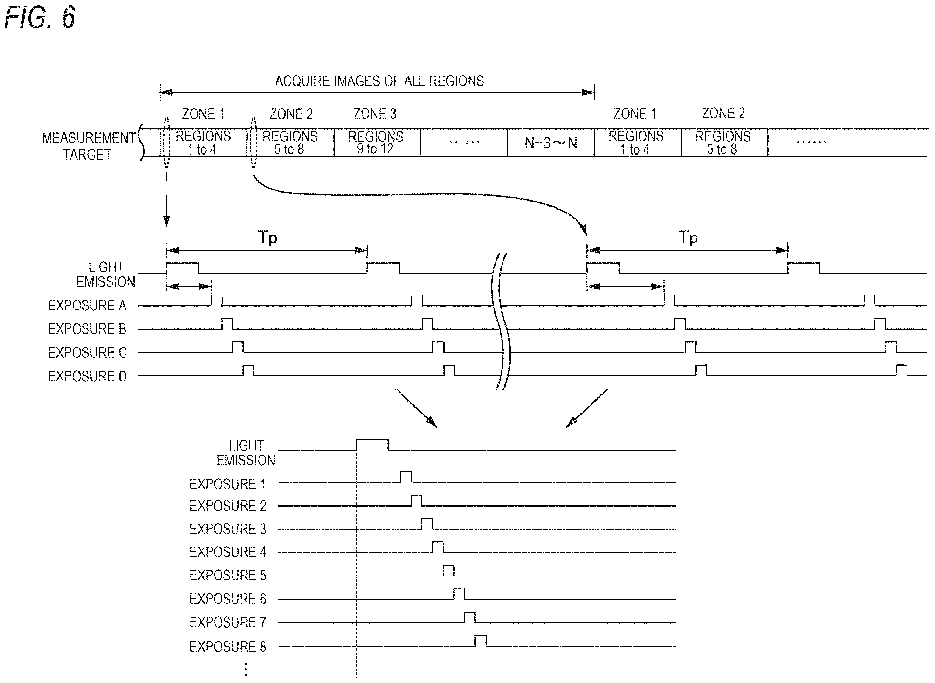

FIG. 5 is an overall flowchart showing an operation of the measurement device 1 (mainly the control unit 30) according to the present embodiment. The control unit 30 executes each processing in the drawing by the CPU executing the program stored in the memory. FIG. 6 is a diagram showing image acquisition. FIG. 6 shows timings at which images of regions 1 to 8 among a plurality of regions 1 to N are acquired. In the diagram showing the timings in FIG. 6, a left side of an upper diagram shows timings for acquiring images of zone 1 (regions 1 to 4), and a right side thereof shows timings of acquiring images of zone 2 (regions 5 to 8).

Regions 1 to 4 and regions 5 to 8 have different delay time of exposure timings with respect to light emission timings. Specifically, in the regions 5 to 8, the exposure timings (timings corresponding to Tdelay in FIG. 1B) with respect to the light emission timings are later than those in the regions 1 to 4, respectively. A lower diagram in FIG. 6 is a diagram showing exposure timings in the regions 1 to 8 with a light emission pulse as a reference. Normally, light emission for the regions 1 to 4 and light emission for the regions 5 to 8 are separate as shown in the upper diagram in FIG. 6, but the lower diagram shows the exposure timings in the regions 1 to 8 with a light emission timing as a reference. In this way, light emission timings are different in the region 4 and the region 5, exposure periods of region 4 and region 5 are consecutive with the light emission pulse as the reference. Therefore, the above "three or more consecutive exposure periods that can include the pulse width Lw" are not limited to those constituted only by exposure periods (for example, exposure periods corresponding to the regions 1 to 4) having the same light emission timing, and may include exposure periods (for example, exposure periods corresponding to the regions 4 and 5) having different emission timings.

First, the timing control unit 32 of the control unit 30 causes the light emitting unit 10d to emit light at the cycle Tp, and controls an exposure timing of the imaging unit 20 according to a light emission timing. Then, the image acquisition unit 34 acquires an image captured by the imaging unit 20 at each exposure timing (S10). First, images of the regions 1 to 4 are acquired. That is, the imaging sensor 22 of the imaging unit 20 is exposed to light in the exposure periods A to D delayed from the light emission timing for each pixel of the image. The control unit 30 repeatedly performs exposure for each cycle Tp, accumulates charges in the storage units CS1 to CS4, and acquires the accumulated charges (signal values Sa to Sd). Then, image data on the acquired range images (subframes) of the regions 1 to 4 is written into an image memory of the image acquisition unit 34 (S11).

Next, similarly, the control unit 30 acquires images of the regions 5 to 8. As shown in FIG. 6, a delay time (delay time of the exposure A to D) with respect to the light emission timing in the regions 5 to 8 is set to be longer than that in the regions 1 to 4. As described above, the number of times of repetition (the number of times of charge accumulation) is set to increase as the measurement target region becomes further away. Then, image data on range images (subframes) of the regions 5 to 8 is written into the image memory of the image acquisition unit 34.

Then, the control unit 30 determines whether images up to the region N (images of all the regions) are acquired (S12). When the images of all the regions up to the region N are not acquired (NO in S12), the control unit 30 returns to step S10 and further acquires an image. When the images of all the regions up to the region N are acquired (YES in S12), the control unit 30 (specifically, the time calculation unit 36 and the distance calculation unit 38) executes distance calculation processing to acquire a distance image (S13).

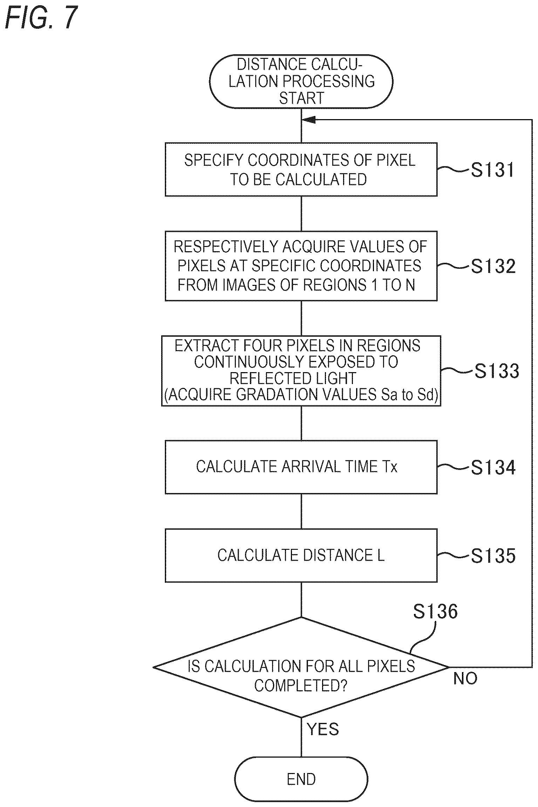

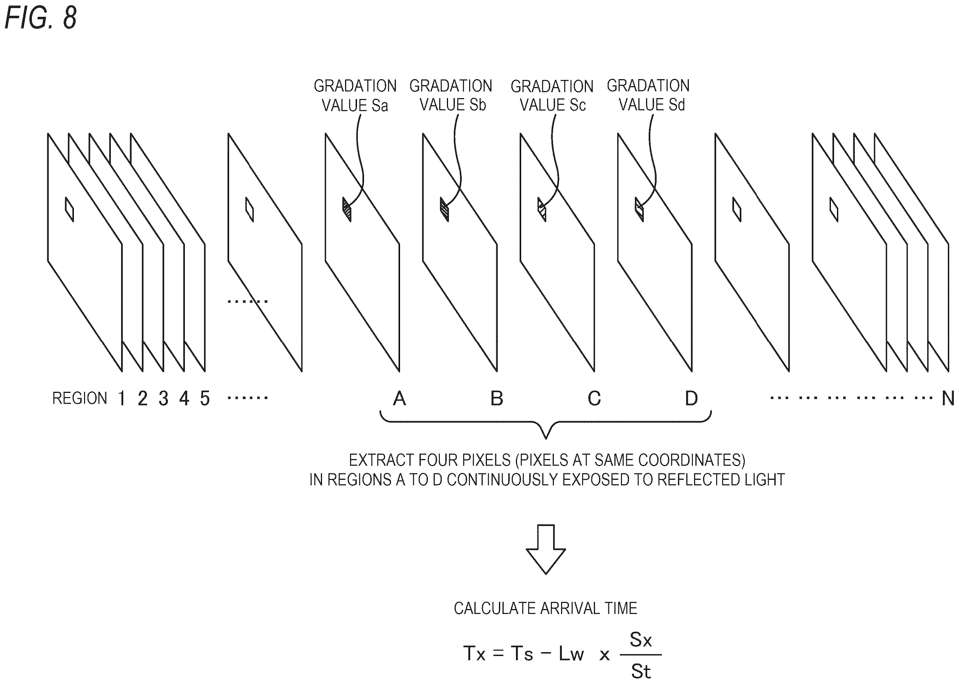

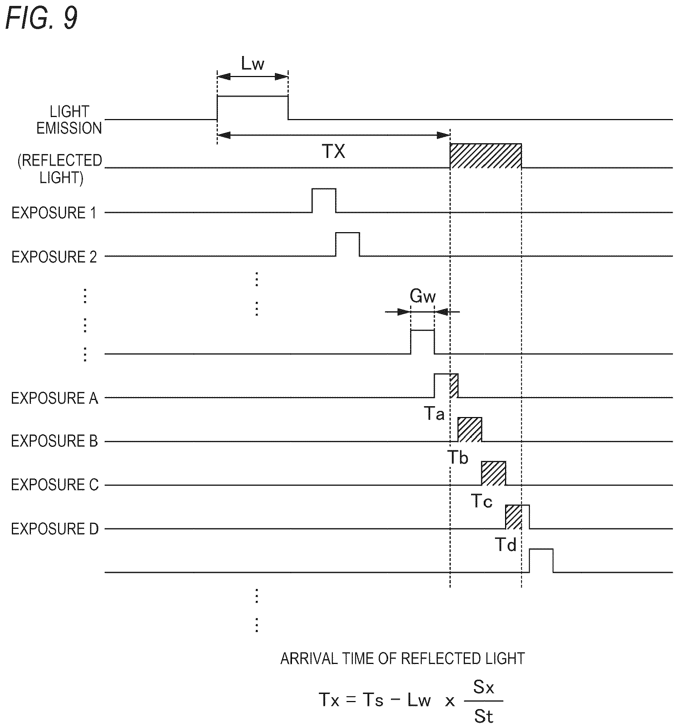

FIG. 7 is a flowchart showing the distance calculation processing. FIG. 8 is a conceptual diagram showing the distance calculation processing, and FIG. 9 is a conceptual diagram showing the distance calculation processing. FIG. 9 is a diagram substantially equivalent to FIG. 8.

First, the control unit 30 (time calculation unit 36) specifies coordinates of a pixel to be calculated (S131). That is, the coordinates of the pixel in two dimensions form are specified.

Next, the control unit 30 acquires values (signal values) of pixels at specific coordinates from images of the regions 1 to N, respectively (S132). That is, as shown in FIG. 8, the control unit 30 acquires values of pixels at the same coordinates (specific coordinates) from the images of the regions 1 to N.

Next, as shown in FIG. 8, the control unit 30 extracts four pixels in regions continuously exposed to the reflected light (S133). For example, the control unit 30 extracts four pixels in regions continuously exposed to the reflected light by extracting four pixels having the highest sum of gradation values. Alternatively, the control unit 30 may extract, for example, four pixels located before and after a pixel having a maximum gradation value (value indicating a large exposure amount). In FIG. 8, it is assumed that four pixels (pixels at the same coordinates) in the regions A to D continuously exposed to the reflected light are extracted, and gradation values thereof are Sa, Sb, Sc, and Sd, respectively. The extracted gradation values Sa, Sb, Sc, and Sd correspond to the "signal values corresponding to three or more consecutive exposure periods that can include the pulse width Lw".

The time calculation unit 36 of the control unit 30 calculates the arrival time Tx using the four gradation values (Sa, Sb, Sc, Sd) according to Equation (4) or Equation (5) described above (S134). The distance calculation unit 38 of the control unit 30 obtains the distance L according to Equation (2) using the arrival time Tx calculated by the time calculation unit 36 and the speed Co of the light (S135). When calculation for all the pixels is not completed (No in S136), the control unit 30 returns to step S131 and executes the same calculation for the next pixel (pixel at other coordinates). When the calculation for all the pixels is completed (YES in S136), the control unit 30 ends the distance calculation processing. The control unit 30 can acquire the distance image (frame: see FIG. 2) by executing the distance calculation processing on all the pixels.

After the distance calculation processing (S13), the control unit 30 writes the distance image into the memory (S14). The control unit 30 executes color conversion processing on the distance image (S15). The color conversion processing is processing of color-coding a color of each pixel according to the distance. Accordingly, it is easy to understand presence of an object and a distance to the object. Then, the control unit 30 executes display processing (S16). The display processing is processing of displaying the color-coded distance image on a display. The color conversion processing (S15) and the display processing (S16) may not be executed.

When the processing is not completed (NO in S17), the control unit 30 returns to step S10 and repeats image acquisition for the regions 1 to N. When the processing is completed (YES in S17), the control unit 30 ends a measurement operation.

### = = = = = Summary = = = = =

The measurement device 1 according to the present embodiment has been described above. The measurement device 1 includes: the light emitting unit 10 configured to emit a light emission pulse; the imaging sensor 22 configured to output a signal value corresponding to an exposure amount for each pixel 221; the timing control unit 32 configured to expose the pixel 221 of the imaging sensor 22 to reflected light in an exposure period that is set according to a measurement target region and has the exposure width Gw shorter than the pulse width Lw of the light emission pulse; and the time calculation unit 36 configured to calculate the arrival time Tx of the reflected light based on the signal values Sa to Sd corresponding to the three or more consecutive exposure periods A to D that can include the pulse width Lw. Accordingly, a distance resolution can be increased, and measurement accuracy can be improved.

The time calculation unit 36 calculates the arrival time Tx of the reflected light based on a ratio of the signal value Sx corresponding to the exposure amount before a boundary timing (for example, Tc and Td) of any two exposure periods (for example, the exposure periods C and D) among the exposure periods A to D. The two exposure periods may be the exposure periods B and C, in which case the boundary timing may be Tb and Tc. The two exposure periods may be the exposure periods B and D, in which case the boundary timing may be Tb and Td.

More specifically, when a sum of the signal values (Sa to Sd) corresponding to the exposure periods A to D is St and a time from emission of the light emission pulse to the boundary timing is Ts, the time calculation unit 36 calculates the arrival time Tx as Tx = Ts - Lw × (Sx/St). Accordingly, the measurement accuracy of the arrival time Tx can be improved.

The boundary timing is preferably a timing (boundary timings Tc and Td) of a boundary between two exposure periods that are the second and subsequent exposure periods B to D among the exposure periods A to D that can include the pulse width Lw. Accordingly, influence of an error in the signal value Sa can be reduced.

The time calculation unit 36 calculates the arrival time Tx by setting the number of consecutive exposure periods that can include the pulse width Lw to four that is larger by one than three that is an integer part of Lw/Gw. Accordingly, the minimum number of exposure periods can be set.

The timing control unit 32 sets the width Gw of the exposure period to an integer fraction (one third in the present embodiment) of the pulse width Lw of the light emission pulse. Accordingly, the measurement accuracy can be improved.

The imaging sensor 22 includes the light receiving element PD that generates charges corresponding to the exposure amount for each pixel 221, four storage units CS 1 to CS4 that accumulate the charges, and a drive circuit (transistors G1 to G4) that distributes and accumulates the charges to the respective storage units CS1 to CS4 according to the exposure periods A to D, and distributes and accumulates charges generated by one light emission pulse to the respective storage units CS1 to CS4 according to the exposure periods A to D. Accordingly, a plurality of exposure periods can be set for once light emission, and a plurality of regions can be measured for once light emission.

The embodiment described above is intended to facilitate understanding of the present disclosure, and is not to be construed as limiting the present disclosure. In addition, it is needless to say that the present disclosure can be changed or improved without departing from the inventive concept thereof, and equivalents thereof are included in the present disclosure.

The present application claims the priority based on Japanese patent application No. 2021-211069 filed on December 24, 2021, and all the contents described in the Japanese patent application are incorporated.

## Claims

1. A measurement device comprising:
a light emitting unit configured to emit pulsed light;
an imaging sensor configured to output a signal value corresponding to an exposure amount for each pixel;
a timing control unit configured to expose the pixel of the imaging sensor to reflected light in an exposure period that is set according to a measurement target region and has an exposure width shorter than a pulse width of the pulsed light; and
a calculation unit configured to calculate an arrival time of the reflected light based on signal values corresponding to three or more consecutive exposure periods that include the pulse width.

2. The measurement device according to claim 1, wherein
the calculation unit calculates the arrival time of the reflected light based on a ratio of a signal value corresponding to the exposure amount before a boundary timing of any two exposure periods among the three or more exposure periods that include the pulse width.

3. The measurement device according to claim 2, wherein
when the pulse width of the pulsed light is Lw, a sum of the signal values corresponding to the three or more consecutive exposure periods that include the pulse width is St, the signal value corresponding to the exposure amount before the boundary timing is Sx, and a time from emission of the pulsed light to the boundary timing is Ts, the calculation unit calculates the arrival time Tx as Tx = Ts - Lw × (Sx/St).

4. The measurement device according to claim 2 or 3, wherein
the boundary timing is a timing of a boundary between two exposure periods that are the second and subsequent exposure periods among the three or more exposure periods that include the pulse width.

5. The measurement device according to any one of claims 1 to 4, wherein
when the pulse width of the pulsed light is Lw and a width of the exposure period is Gw, the calculation unit calculates the arrival time by setting the number of consecutive exposure periods that include the pulse width to a number larger by one than an integer part of Lw/Gw.

6. The measurement device according to any one of claims 1 to 5, wherein
the timing control unit sets the width of the exposure period to an integer fraction of the pulse width of the pulsed light.

7. The measurement device according to any one of claims 1 to 6, wherein
the imaging sensor
includes a light receiving element that generates charges corresponding to the exposure amount for each pixel, a plurality of storage units that accumulate the charges, and a drive circuit that distributes and accumulates the charges to the respective storage units according to the exposure periods, and
distributes and accumulates charges generated by one pulsed light to the respective storage units according to the exposure periods.
